# EUROPÄISCHE PATENTSCHRIFT

(11) **EP 2 816 235 B1**
(45) Veröffentlichungstag und Bekanntmachung des Hinweises auf die Patenterteilung: **12.06.2019**
(21) Anmeldenummer: 14162544.2
(22) Anmeldetag: 31.03.2014
(51) Int. Cl.: F16J 15/40, F16J 15/34, F04C 27/02

(54) **Vakuumpumpe**
Vacuum pump
Pompe à vide

(30) Priorität: 19.06.2013 DE 102013211529
(43) Veröffentlichungstag der Anmeldung: 24.12.2014
(73) Patentinhaber: PFEIFFER VACUUM GMBH, 35614 Asslar (DE)
(72) Erfinder: Hotopp, Frank, 35510 Butzbach (DE); Oberbeck, Sebastian, 35781 Weilburg (DE)
(74) Vertreter: Manitz Finsterwald Patent- und Rechtsanwaltspartnerschaft mbB

(56) Entgegenhaltungen:
- EP-A1- 1 788 290
- EP-A2- 1 113 176
- WO-A1-2012/079727
- US-A- 5 066 026
- US-A1- 2011 256 003
- US-A1- 2012 001 394

## Beschreibung

Die Erfindung betrifft eine Vakuumpumpe, insbesondere eine Schraubenpumpe oder eine Wälzkolbenpumpe, mit einem Arbeitsraum, einem Lagerraum, einer zwischen dem Arbeitsraum und dem Lagerraum angeordneten Trennwand und einer sich durch die Trennwand hindurch erstreckenden Rotorwelle.

Vakuumpumpen werden in unterschiedlichen technischen Prozessen eingesetzt, um ein für den jeweiligen Prozess notwendiges Vakuum zu schaffen. Eine Vakuumpumpe umfasst typischerweise einen Arbeitsraum, in dem eine pumpaktive Struktur der Vakuumpumpe angeordnet ist, die das in dem Arbeitsraum vorhandene Prozessgas von einem Einlass zu einem Auslass der Vakuumpumpe fördert und dadurch pumpt. Ein Abschnitt der Rotorwelle, welcher den rotorseitigen Teil der pumpaktiven Struktur trägt, erstreckt sich in den Arbeitsraum hinein und ein anderer Abschnitt der Rotorwelle erstreckt sich in einen Lagerraum hinein, in dem ein Lager zur Lagerung der Rotorwelle und ggf. ein Getriebe für die Rotorwelle angeordnet sind.

Es werden immer höhere Anforderungen an die Qualität des für einen bestimmten Prozess zu schaffenden Vakuums gestellt. Wenn Fremdbestandteile, die z.B. von einem Schmiermittel des Wälzlagers oder einem anderen in dem Lagerraum eingesetzten Betriebsmittel stammen, aus dem Lagerraum in den Arbeitsraum gelangen, wird das Vakuum verunreinigt und die Vakuumqualität verringert, was bei einem Herstellungsverfahren schlimmstenfalls zur Verwerfung einer kompletten Produktionscharge führen kann. Besonders schädlich für die Qualität des Vakuums sind unerwünschte Kohlenwasserstoffe, welche in ölhaltigen Betriebsmitteln enthalten sein können, die in dem Lagerraum eingesetzt werden.

Ebenso problematisch wie aus dem Lagerraum in den Arbeitsraum gelangende Fremdbestandteile sind korrosive Gase, die in den geförderten Prozessgasen enthalten sind und von dem Arbeitsraum in den Lagerraum gelangen. Solche Gase greifen die in dem Lagerraum vorhandenen Lager, Zahnräder, Betriebsmittel und weitere Komponenten an, was zu einer Schädigung und zu einem vorzeitigen Ausfall der Pumpe führen kann. Da die betroffenen Komponenten vor einer Reparatur dekontaminiert werden müssen und eine Dekontaminierung und Entsorgung von betroffenen Betriebsmitteln erforderlich ist, kann dadurch ein erheblicher Reparatur- bzw. Wartungsaufwand hervorgerufen werden.

Bei bekannten Vakuumpumpen führt der Pumpbetrieb außerdem zu einer Evakuierung nicht nur des Arbeitsraums, sondern auch des Lagerraums. Das in dem Lagerraum vorhandene Vakuum ist nachteilig, da die Wärme, die bei dem Betrieb der Vakuumpumpe von den in dem Lagerraum untergebrachten Lagern, Zahnrädern und weiteren Komponenten erzeugt wird, über das Vakuum nur unzureichend abgeführt wird, was zu einer Schädigung dieser Komponenten führen kann. Außerdem können bei fettgeschmierten Lagern nur vakuumtaugliche Fettschmierstoffe eingesetzt werden, so dass andere Schmierstoffe, die bestimmte Anforderungen erfüllen, nicht einsetzbar sind.

Aus den vorstehenden Gründen besteht die Bestrebung, einen Gas- oder Flüssigkeitsaustausch zwischen dem Arbeitsraum und dem Lagerraum so weit wie möglich zu unterbinden. Dazu können zum Beispiel Wellendichtringe oder Lippendichtungen eingesetzt werden, um den Arbeitsraum und den Lagerraum gasdicht voneinander zu trennen. Diese Dichtungen unterliegen jedoch einem hohen Verschleiß, verringern die Energieeffizienz des Pumpbetriebs und sind auf den Einsatz bei geringen Temperaturen und in Vakuumpumpen mit geringen Drehzahlen bzw. Rotationsgeschwindigkeiten beschränkt.

Des Weiteren lassen sich Kolbendichtringe als Gasdichtung in Verbindung mit einem Ölspritzring als Öldichtung einsetzen, um eine nahezu berührungslose und verschleißfreie Dichtung zwischen dem Arbeitsraum und dem Lagerraum zu erreichen. Jedoch kann der Gas- und Flüssigkeitsaustausch auf diese Weise selbst bei dem zusätzlichen Einsatz eines Sperrgases nicht vollständig unterbunden werden, ohne dass eine erhebliche Verringerung der Qualität des Vakuums durch das Sperrgas erfolgt.

Aus der US 5,066,026 A ist eine Wellendichtung für eine Vakuumpumpe bekannt, welche zwischen einer Rotorwelle und einer Trennwand angeordnet ist, die sich zwischen einem Arbeitsraum und einem Lagerraum befindet und durch die sich die Rotorwelle erstreckt. Die Wellendichtung ist als eine doppelt wirkende gasgeschmierte Gleitringdichtung ausgebildet.

Die EP 1 113 176 A2 beschreibt eine ähnliche Gleitringdichtung, die jedoch mit Öl geschmiert wird.

Ferner ist in der US 2012/001394 A1 ebenfalls eine Gleitringdichtung beschrieben, der zur Kühlung ein Fluid zugeführt wird.

Es ist daher eine Aufgabe der Erfindung, eine Vakuumpumpe anzugeben, bei der die vorstehend beschriebenen Nachteile überwunden werden und bei der insbesondere ein Fluidaustausch zwischen dem Arbeitsraum und dem Lagerraum zumindest näherungsweise vollständig verhindert wird.

Die Aufgabe wird durch eine Vakuumpumpe mit den Merkmalen des Anspruchs 1 gelöst.

Die Vakuumpumpe, welche vorzugsweise eine Schraubenpumpe oder eine einstufige oder mehrstufige Wälzkolbenpumpe ist, umfasst einen Arbeitsraum, einen Lagerraum, eine zwischen dem Arbeitsraum und dem Lagerraum angeordnete Trennwand und wenigstens eine sich durch die Trennwand hindurch erstreckende Rotorwelle. Die Vakuumpumpe umfasst außerdem eine Wellendichtung zur Abdichtung zwischen der Rotorwelle und der Trennwand, wobei die Wellendichtung als gasgeschmierte Gleitringdichtung ausgebildet ist.

Eine gasgeschmierte Gleitringdichtung umfasst wenigstens einen Gleitring, welcher an der rotierenden oder der statischen der gegeneinander abzudichtenden Komponenten mit einer Befederung gelagert ist, und wenigstens einen mit der jeweils anderen Komponente verbundenen Gegenring. Die Dichtung umfasst wenigstens ein Dichtflächenpaar, wobei ein Dichtflächenpaar jeweils durch einander gegenüberliegende Dichtflächen eines Gleitrings und eines Gegenrings gebildet ist, die im Ruhezustand der Gleitringdichtung unter einer durch die Befederung des jeweiligen Gleitrings hervorgerufenen Vorspannung aneinander anliegen können. Die Dichtung ist im Betrieb so mit einem Schmiergas beaufschlagbar, dass ein jeweiliger Gleitring gegen seine Befederung zurückgedrängt wird und zwischen den Dichtflächen des jeweiligen Dichtflächenpaares ein Dichtspalt entsteht, wobei das durch den Dichtspalt strömende Schmiergas ein Luftpolster zwischen den Dichtflächen erzeugt, welches eine berührungslose Abdichtung zwischen den Dichtflächen gewährleistet.

Mit der gasgeschmierten Gleitringrichtung wird eine äußerst zuverlässige und gleichzeitig flüssigkeitslose und berührungslose und somit im Wesentlichen verlust- und verschleißfreie fluiddichte Abdichtung zwischen dem Arbeitsraum und dem Lagerraum der Pumpe geschaffen. Die Abdichtung unterbindet einen Fluidaustausch zwischen dem Arbeitsraum und dem Lagerraum unabhängig von der Drehzahl und der Temperatur der Pumpe zumindest annähernd vollständig, ohne dass durch die Abdichtung selbst eine störende Verringerung der Qualität des Vakuums hervorgerufen wird.

Infolge der Abdichtung kann in den Lagerraum ein über dem Druck in dem Arbeitsraum liegender Druck vorherrschen, welcher z.B. zumindest annähernd dem Atmosphärendruck entsprechen kann, wodurch eine gute Abfuhr der Wärme gewährleistet ist, die von den in dem Lagerraum vorhandenen Komponenten erzeugt wird.

Die Qualität des mit der Vakuumpumpe erreichbaren Vakuums sowie die Betriebszuverlässigkeit und die Lebensdauer der Vakuumpumpe werden dadurch erheblich gesteigert.

Erfindungsgemäß ist die Wellendichtung als einfachwirkende gasgeschmierte Gleitringdichtung ausgebildet. So lässt sich mit einfachen Mitteln eine zuverlässige Abdichtung zwischen dem Arbeitsraum und dem Lagerraum erreichen.

Ferner ist erfindungsgemäß eine weitere Dichtung zur Abdichtung des Lagerraums gegenüber einer Schmiergaszuführung für die Wellendichtung vorgesehen, wobei die weitere Dichtung einen zwischen der Rotorwelle und der Trennwand angeordneten Dichtspalt umfasst. Dadurch kann auf einfache Weise verhindert werden, dass in dem Lagerraum vorhandene Fluide in die Schmiergaszuführung gelangen und gemeinsam mit dem Schmiergas dem Arbeitsraum zugeführt werden.

Vorteilhafte Ausführungsformen der Erfindung sind in den Unteransprüchen, der Beschreibung und in den Figuren beschrieben.

Es ist es bevorzugt, wenn das Schmiergas über ein Dichtflächenpaar der einfachwirkenden Gleitringdichtung in den Arbeitsraum führbar ist. Dadurch kann der Arbeitsraum wirksam gegenüber den in dem Lagerraum vorhandenen Fluiden abgedichtet werden.

Im Betrieb kann ein Teil des Schmiergases über das Dichtflächenpaar in den Arbeitsraum gelangen und ein weiterer Teil des Schmiergases über die weitere Dichtung bzw. deren Dichtspalt in den Lagerraum gelangen, wodurch insgesamt eine zuverlässige Abdichtung zwischen dem Arbeitsraum und dem Lagerraum erreicht wird.

Prinzipiell ist auch eine Ausführungsform mit einer einfachwirkenden Gleitringdichtung denkbar, bei der das Schmiergas über ein Dichtflächenpaar der Wellendichtung anstatt in den Arbeitsraum in den Lagerraum führbar ist. Dabei kann eine weitere Dichtung zur Abdichtung des Arbeitsraums gegenüber der Schmiergaszuführung vorgesehen sein, welche einen zwischen der Rotorwelle und der Trennwand angeordneten Dichtspalt umfassen kann.

Gemäß einer vorteilhaften Ausführungsform ist die Wellendichtung als doppelwirkende gasgeschmierte Gleitringdichtung ausgebildet. Das Schmiergas kann dabei über jeweils ein Dichtflächenpaar der Wellendichtung sowohl in den Arbeitsraum als auch in den Lagerraum führbar sein.

Durch eine solche doppelwirkende gasgeschmierte Gleitringdichtung wird eine besonders zuverlässige fluiddichte Abdichtung der beiden Räume erreicht, die einen Fluidaustausch zwischen den Räumen im Wesentlichen vollständig unterbindet.

Vorzugsweise umfasst die doppelwirkende Gleitringdichtung zwei Gleitringe, die jeweils die gleitringseitige Dichtfläche eines Dichtflächenpaares bilden. Die doppelwirkende Gleitringdichtung kann einen gemeinsamen Gegenring umfassen, der die gegenringseitigen Dichtflächen beider Dichtflächenpaare bildet. Bevorzugt sind die Dichtflächenpaare der doppelwirkenden Gleitringdichtung durch eine gemeinsame Schmiergaszuführung mit Schmiergas versorgbar. Die Schmiergaszuführung weist vorzugsweise eine stromaufwärts der Dichtflächenpaare angeordnete Verzweigung auf, durch die das Schmiergas zu den beiden Dichtflächenpaaren führbar ist.

Gemäß einer vorteilhaften Ausführungsform ist ein zwischen der weiteren Dichtung und der Wellendichtung angeordneter und mit Schmiergas versorgbarer Bereich zumindest teilweise entlüftbar. Die Entlüftung bewirkt eine Anpassung des Drucks des vorzugsweise unter Überdruck zugeführten Schmiergases.

Die Entlüftung kann durch einen Entlüftungskanal gebildet sein, welcher den mit dem Schmiergas versorgbaren Bereich mit dem Äußeren der Vakuumpumpe verbindet. Der Querschnitt des Entlüftungskanals kann so angepasst oder anpassbar sein, dass sich in dem mit dem Schmiergas versorgbaren Bereich während des Betriebs ein gewünschter Schmiergasdruck bzw. ein gewünschter Überdruck des Schmiergases gegenüber dem in dem Arbeitsraum bzw. in dem Lagerraum jeweils vorherrschenden Druck ergibt, wobei der Druck in dem mit dem Schmiergas versorgbaren Bereich oberhalb des Atmosphärendrucks liegen kann.

Aufgrund der gasgeschmierten Gleitringdichtung kann während des Betriebs der Vakuumpumpe in dem Lagerraum ohne weiteres ein Druck aufrecht erhalten werden, welcher oberhalb des in dem Arbeitsraum vorliegenden Drucks liegt und welcher beispielsweise zumindest näherungsweise dem Atmosphärendruck entsprechen oder oberhalb des Atmosphärendrucks liegen kann. Dadurch wird die Wärmeabfuhr von den in dem Lagerraum vorhandenen Komponenten erheblich verbessert, so dass die Zuverlässigkeit und die Betriebssicherheit der Vakuumpumpe erhöht werden.

Gemäß einer vorteilhaften Ausführungsform ist der Lagerraum oder zumindest ein Bereich des Lagerraums zumindest teilweise entlüftbar. Durch die Entlüftung des Lagerraums kann der Druck in dem Lagerraum so angepasst werden, dass sich in dem Lagerraum ein gewünschter Unterdruck gegenüber dem Druck des Schmiergases ergibt, welcher einen für die gewünschte Abdichtung erforderlichen Schmiergasfluss in den Lagerraum gewährleistet. Der Lagerraum kann teilweise entlüftbar sein, so dass sich im Betrieb in dem Lagerraum ein Druck oberhalb des Atmosphärendrucks ergibt, oder der Lagerraum kann vollständig entlüftbar sein, so dass sich in dem Lagerraum im Betrieb zumindest näherungsweise Atmosphärendruck einstellt.

Eine bevorzugte Ausführungsform sieht vor, dass der Wellendichtung als Schmiergas ein Sperrgas, insbesondere ein Inertgas, zuführbar ist. Dadurch wird eine Beeinträchtigung der Qualität des Vakuums oder der Komponenten der Vakuumpumpe durch das Schmiergas weitestgehend vermieden.

In dem Arbeitsraum ist vorzugsweise eine pumpaktive Struktur der Vakuumpumpe angeordnet, mit der das in dem Arbeitsraum vorhandene Prozessgas von einem Einlass zu einem Auslass der Vakuumpumpe förderbar und dadurch pumpbar ist. Der rotorseitige Teil der pumpaktiven Struktur ist von einem in dem Arbeitsraum angeordneten Abschnitt der Rotorwelle getragen und kann mit der Rotorwelle zum Beispiel einen Schraubenpumpenrotor oder einen Wälzkolbenpumpenrotor bilden. In dem Lagerraum ist vorzugsweise ein, insbesondere geschmiertes, Lager wie z.B. ein Wälzlager untergebracht, durch das die Rotorwelle drehbar gelagert ist, und/oder ein mit der Rotorwelle gekoppeltes, insbesondere geschmiertes, Getriebe.

Nachfolgend wird die Erfindung beispielhaft anhand einer vorteilhaften Ausführungsform unter Bezugnahme auf die beigefügten Figuren beschrieben. Es zeigen:
- Fig. 1: eine Vakuumpumpe gemäß einem Beispiel, das nicht in den Umfang der Ansprüche fällt, mit einer gasgeschmierten Gleitringdichtung im Ruhezustand,
- Fig. 2: die in Fig. 1 gezeigte Vakuumpumpe im Betriebszustand, und
- Fig. 3: eine Vakuumpumpe gemäß einer Ausführungsform der Erfindung mit einer gasgeschmierten Gleitringdichtung im Ruhezustand.

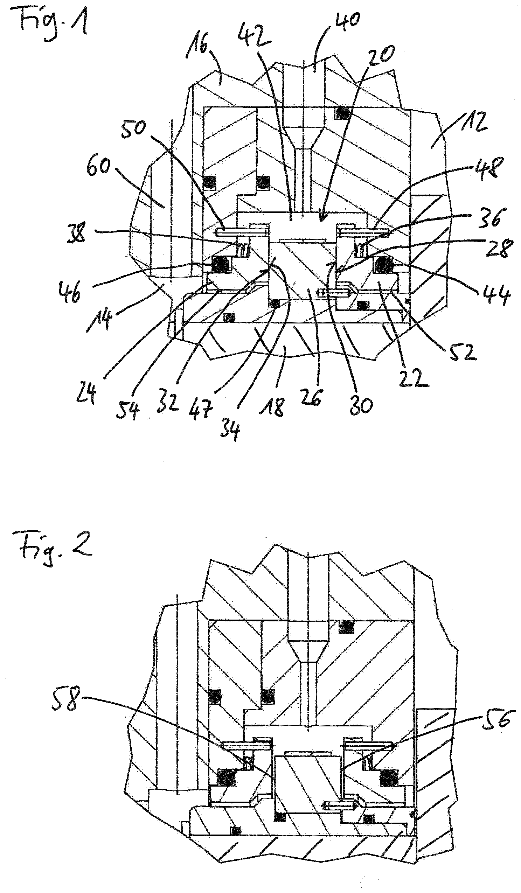

Die in Fig. 1 gezeigte Vakuumpumpe umfasst einen Arbeitsraum 12, einen Lagerraum 14 und eine den Arbeitsraum 12 und den Lagerraum 14 unmittelbar voneinander trennende Trennwand 16. Eine Rotorwelle 18 erstreckt sich durch die Trennwand 16 hindurch sowohl in den Arbeitsraum 12 als auch in den Lagerraum 14 hinein. Um einen Gas- oder Flüssigkeitsaustausch zwischen dem Arbeitsraum 12 und dem Lagerraum 14 zu vermeiden, ist eine doppelwirkende gasgeschmierte Gleitringdichtung 20 vorgesehen, die eine gas- und flüssigkeitsdichte Abdichtung zwischen der Rotorwelle 18 und der Trennwand 16 schafft und somit den Arbeitsraum 12 und den Lagerraum 14 gegeneinander abdichtet.

Die Gleitringdichtung 20 umfasst zwei an der Trennwand 16 gelagerte Gleitringe 22, 24 und einen zwischen den Gleitringen 22, 24 angeordneten und mit der Rotorwelle 18 verbundenen Gegenring 26. Die Gleitringe 22, 24 sind jeweils durch ein Federelement 36, 38 und einen Lagerstift 48, 50 in Rotationsachsenrichtung längsverschiebbar gelagert.

Die Gleitringe 22, 24 und der Gegenring 26 weisen einander gegenüberliegende Dichtflächen 28, 30, 32, 34 auf, wobei eine Dichtfläche 28 des Gleitrings 22 und eine Dichtfläche 30 des Gegenrings 26 sowie eine Dichtfläche 32 des Gleitrings 24 und eine Dichtfläche 34 des Gegenrings 26 jeweils ein Dichtflächenpaar bilden und unter einer durch die Federelemente 36, 38 hervorgerufenen Vorspannung aneinander anliegen.

Zwischen den Gleitringen 22, 24 und der Trennwand 16 und zwischen dem Gegenring 26 und der Rotorwelle 18 ist jeweils ein O-Ring 44, 46, 47 angeordnet, der eine Nebendichtung für einen Gleitring 22, 24 bzw. den Gegenring 26 bildet und eine dichte Verbindung zwischen dem jeweiligen Gleitring 22, 24 und der Trennwand 16 bzw. zwischen dem Gegenring 26 und der Rotorwelle 18 schafft.

Die gasgeschmierte Gleitringdichtung 20 wird über eine Schmiergaszuführung mit einem als Schmiergas dienenden Sperrgas versorgt. Das Schmiergas gelangt durch einen in der Trennwand 16 angeordneten Zuleitungskanal 40 in einen Zuleitungsbereich 42, in dem sich das Schmiergas verzweigt und zu den beiden Dichtflächenpaaren 28, 30 sowie 32, 34 gelangt. Auf der von dem Zuleitungsbereich 42 abgewandten Seite der Dichtflächenpaare 28, 30 und 32, 34 ist jeweils ein Ableitungskanal 52, 54 für das Schmiergas vorgesehen, welcher von dem jeweiligen Dichtflächenpaar 28, 30 und 32, 34 in den Arbeitsraum 12 bzw. in den Lagerraum 14 führt.

In unmittelbarer Nähe des lagerraumseitigen Endes des Ableitungskanals 54 weist der Lagerraum 14 einen Entlüftungskanal 60 auf, der den Lagerraum 14 mit dem Pumpenäußeren verbindet. Über den Entlüftungskanal 60 ist der Lagerraum 14 vollständig entlüftbar, so dass der Lagerraum 14 im Betrieb der Gleitringdichtung 20 zumindest näherungsweise auf Atmosphärendruck gehalten wird.

Im Betrieb der Vakuumpumpe wird über den Zuleitungskanal 40 Schmiergas unter Druck in den Zuleitungsbereich 42 geleitet. Durch den dynamischen Druck des Schmiergases werden die Gleitringe 22, 24 entgegen der Vorspannung der Federelemente 36, 38 zurückgedrängt, so dass die Dichtflächen 28, 32 der Gleitringe 22, 24 von den gegenüberliegenden Dichtflächen 30, 34 des Gegenrings 26 abgehoben werden. Fig. 2 zeigt die Vakuumpumpe in ihrem Betriebszustand, in dem zwischen den abgehobenen Dichtflächen 28, 32 der Gleitringe 22, 24 und den gegenüberliegenden Dichtflächen 30, 34 des Gegenrings 26 jeweils ein enger Dichtspalt 56, 58 (Fig. 2) vorhanden ist, durch den das Schmiergas in den Ableitungskanal 52, 54 und von dort in den Arbeitsraum 12 und in den Lagerraum 14 gelangt.

Anstelle der Federelemente 36, 38 und der O-Ringe 44, 46, 47 können auch ein Faltenbalg und eine metallische Dichtung vorgesehen sein, die eine entsprechende Befederung und Dichtung gewährleisten können.

In den engen Dichtspalten 56, 58 wird durch den kontinuierlichen Schmiergasfluss jeweils ein Luftpolster erzeugt, welches eine berührungslose Abdichtung des jeweiligen Dichtspalts 56, 58 gewährleistet, wobei der Dichtspalt 56 eine berührungslose Abdichtung zu dem Arbeitsraum 12 hin schafft und der Dichtspalt 58 eine berührungslose Abdichtung zu dem Lagerraum 14 hin schafft.

Der Entlüftungskanal 60 gewährleistet dabei einen definierten Unterdruck in dem Lagerraum 14 gegenüber dem Schmiergasdruck in dem Zuleitungsbereich 42, wodurch ein zuverlässiger Betrieb der gasgeschmierten Gleitringdichtung 20 im Bereich des Dichtflächenpaares 32, 34 gewährleistet wird.

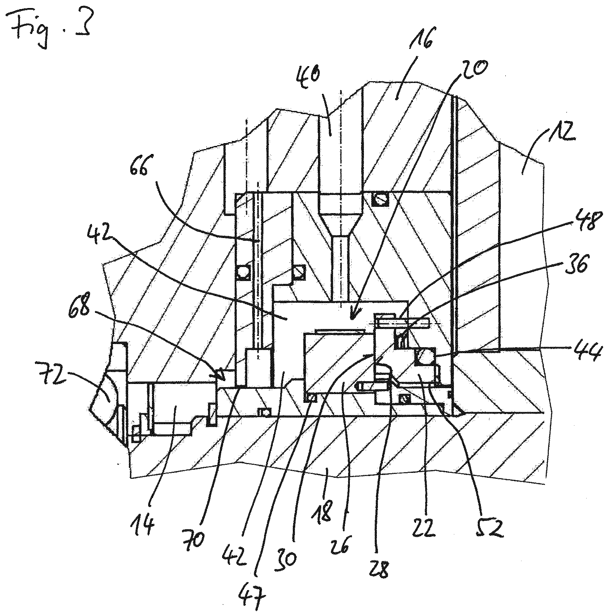

Fig. 3 zeigt eine Vakuumpumpe gemäß einer Ausführungsform der Erfindung, wobei einander entsprechende Elemente in Fig. 1, 2 und Fig. 3 jeweils mit denselben Bezugszeichen gekennzeichnet sind.

Die in Fig. 3 gezeigte Vakuumpumpe umfasst eine einfachwirkende gasgeschmierte Gleitringdichtung 20, welche im Wesentlichen die dem Arbeitsraum 12 zugeordnete Hälfte der in den Beispielen von Fig. 1 und 2 gezeigten Gleitringdichtung umfasst.

Der Lagerraum 14 ist von dem Zuleitungsbereich 42 durch eine weitere Dichtung 68 abgedichtet, welche einen zwischen der Rotorwelle 18 und der Trennwand 16 angeordneten Dichtspalt 70 umfasst. Während des Betriebs strömt das Schmiergas nicht nur durch den zwischen dem Dichtflächenpaar 28, 30 entstehenden Dichtspalt in den Arbeitsraum 12, sondern zusätzlich durch den Dichtspalt 70 in den Lagerraum 14, um den Lagerraum 14 gegenüber dem Zuleitungsbereich 42 abzudichten.

Ein Entlüftungskanal 66 mit einem kleinen Strömungsquerschnitt verbindet den Zuleitungsbereich 42 mit dem Pumpenäußeren. Dadurch wird der bei dem Betrieb der Gleitringdichtung 20 in dem Zuleitungsbereich 42 vorherrschende Schmiergasdruck reguliert und ein definierter Überdruck des Schmiergases gegenüber dem in dem Arbeitsraum 12 und dem Lagerraum 14 vorherrschenden Druck gewährleistet. Der Lagerraum 14 kann zusätzlich eine Entlüftung aufweisen, z.B. um den Lagerraum 14 auf Atmosphärendruck zu halten.

In Fig. 3 ist ferner ein in dem Lagerraum 14 aufgenommenes Wälzlager 72 gezeigt, mit dem die Rotorwelle 18 drehbar gelagert ist.

### Bezugszeichenliste

- 12: Arbeitsraum
- 14: Lagerraum
- 16: Trennwand
- 18: Rotorwelle
- 20: gasgeschmierte Gleitringdichtung
- 22, 24: Gleitring
- 26: Gegenring
- 28, 30: Dichtfläche
- 32, 34: Dichtfläche
- 36, 38: Federelement
- 40: Zuleitungskanal
- 42: Zuleitungsbereich
- 44, 46, 47: O-Ring
- 48, 50: Lagerstift
- 52, 54: Ableitungskanal
- 56, 58: Dichtspalt
- 60: Entlüftungskanal
- 66: Entlüftungskanal
- 68: weitere Dichtung
- 70: Dichtspalt
- 72: Wälzlager

## Patentansprüche

1. Vakuumpumpe, insbesondere Schraubenpumpe oder einstufige oder mehrstufige Wälzkolbenpumpe, mit einem Arbeitsraum (12), einem Lagerraum (14), einer zwischen dem Arbeitsraum und dem Lagerraum angeordneten Trennwand (16), wenigstens einer sich durch die Trennwand (16) hindurch erstreckenden Rotorwelle (18) und einer Wellendichtung (20) zur Abdichtung zwischen der Rotorwelle (18) und der Trennwand (16),
wobei die Wellendichtung (20) als einfachwirkende gasgeschmierte Gleitringdichtung ausgebildet ist, **dadurch gekennzeichnet, dass** eine weitere Dichtung (68) zur Abdichtung des Lagerraums (14) gegenüber einer Schmiergaszuführung für die Wellendichtung (20) vorgesehen ist und die weitere Dichtung (68) einen zwischen der Rotorwelle (18) und der Trennwand (16) angeordneten Dichtspalt (70) umfasst.

2. Vakuumpumpe nach Anspruch 1,
**dadurch gekennzeichnet, dass**
ein Schmiergas über ein Dichtflächenpaar (28, 30) der Wellendichtung in den Arbeitsraum (12) führbar ist.

3. Vakuumpumpe nach Anspruch 1 oder 2,
**dadurch gekennzeichnet, dass**
ein zwischen der weiteren Dichtung (68) und der Wellendichtung (20) angeordneter und mit Schmiergas versorgbarer Bereich (42) zumindest teilweise entlüftbar ist.

4. Vakuumpumpe nach einem der vorstehenden Ansprüche,
**dadurch gekennzeichnet, dass**
der Lagerraum (14) oder zumindest ein Bereich des Lagerraums (14) zumindest teilweise entlüftbar ist.

5. Vakuumpumpe nach einem der vorstehenden Ansprüche,
**dadurch gekennzeichnet, dass**
der Wellendichtung (20) als Schmiergas ein Sperrgas, insbesondere ein Inertgas, zuführbar ist.

## Claims

1. A vacuum pump, in particular a screw pump or a single-stage or multi-stage Roots pump, comprising a work space (12); a storage space (14); a partition wall (16) arranged between the work space and the storage space; at least one rotor shaft (18) extending through the partition wall (16); and a shaft seal (20) for a sealing between the rotor shaft (18) and the partition wall (16),
wherein the shaft seal (20) is configured as a single-acting, gaslubricated slide ring seal,
**characterized in that**
a further seal (68) is provided for sealing the storage space (14) with respect to a lubricating gas supply for the shaft seal (20) and the further seal (68) comprises a sealing gap (70) arranged between the rotor shaft (18) and the partition wall (16).

2. A vacuum pump in accordance with claim 1,
**characterized in that**
a lubricating gas can be guided over a sealing surface pair (28, 30) of the shaft seal into the work space (12).

3. A vacuum pump in accordance with claim 1 or claim 2,
**characterized in that**
a region (42) which is arranged between the further seal (68) and the shaft seal (20) and which can be supplied with lubricating gas can be vented at least in part.

4. A vacuum pump in accordance with any one of the preceding claims,
**characterized in that**
the storage space (14) or at least a region of the storage space (14) can be vented at least in part.

5. A vacuum pump in accordance with any one of the preceding claims,
**characterized in that**
a sealing gas, in particular an inert gas, can be supplied to the shaft seal (20) as the lubricating gas.

## Revendications

1. Pompe à vide, en particulier pompe à vis ou pompe Roots à étage unique ou à étages multiples, comportant une chambre de travail (12), une chambre à palier (14), une cloison de séparation (16) agencée entre la chambre de travail et la chambre à palier, au moins un arbre de rotor (18) traversant la cloison de séparation (16) et un joint d'étanchéité d'arbre pour l'étanchement entre l'arbre de rotor (18) et la cloison de séparation (16), dans laquelle
le joint d'étanchéité d'arbre (20) est réalisé sous la forme d'une garniture d'étanchéité à anneau glissant à effet simple et lubrifiée par gaz, **caractérisée en ce que**
il est prévu un autre joint d'étanchéité (68) pour étancher la chambre à palier (14) par rapport à une alimentation en gaz de lubrification pour le joint d'étanchéité d'arbre (20), et l'autre joint d'étanchéité (68) comprend une fente d'étanchéité (70) disposée entre l'arbre de rotor (18) et la cloison de séparation (16).

2. Pompe à vide selon la revendication 1,
**caractérisée en ce que**
le gaz de lubrification est susceptible d'être amené dans la chambre de travail (12) par une paire de surfaces d'étanchéité (28, 30) du joint d'étanchéité d'arbre.

3. Pompe à vide selon la revendication 1 ou 2,
**caractérisée en ce que**
une zone (42) disposée entre l'autre joint d'étanchéité (68) et le joint d'étanchéité d'arbre (20) et susceptible d'être alimentée en gaz de lubrification peut être purgée au moins partiellement.

4. Pompe à vide selon l'une des revendications précédentes,
**caractérisée en ce que**
la chambre à palier (14) ou au moins une zone de la chambre à palier (14) peut être purgée au moins partiellement.

5. Pompe à vide selon l'une des revendications précédentes,
**caractérisée en ce que**
à titre de gaz de lubrification, un gaz d'arrêt, en particulier un gaz inerte, peut être amené au joint d'étanchéité d'arbre (20).
